Europäisches Patentamt

European Patent Office

Office européen des brevets

(19)

(11) Veröffentlichungsnummer: **0 230 496**
**B1**

(12) # EUROPÄISCHE PATENTSCHRIFT

(45) Veröffentlichungstag der Patentschrift:
08.08.90

(21) Anmeldenummer: 86101019.7

(22) Anmeldetag: 25.01.86

(51) Int. Cl.⁵: **G05D 23/275**, G05D 23/30,
A47J 37/12, H05B 1/02

(54) Temperatur-Regeleinrichtung, insbesondere für Flüssigkeiten oder Gase.

(43) Veröffentlichungstag der Anmeldung:
05.08.87 Patentblatt 87/32

(45) Bekanntmachung des Hinweises auf die Patenterteilung:
08.08.90 Patentblatt 90/32

(84) Benannte Vertragsstaaten:
AT CH FR GB IT LI SE

(56) Entgegenhaltungen:
EP-A- 0 133 906
EP-A- 0 157 277
DE-A- 2 026 965
US-A- 3 384 195
US-A- 3 720 155

(73) Patentinhaber: E.G.O. Elektro-Geräte Blanc u. Fischer,
Rote-Tor-Strasse Postfach 11 80,
D-7519 Oberderdingen(DE)

(72) Erfinder: Knauss, Hermann, Sonnenhalde 6,
D-7519 Oberderdingen(DE)

(74) Vertreter: Patentanwälte Ruff und Beier,
Neckarstrasse 50, D-7000 Stuttgart 1(DE)

## Beschreibung

Die Erfindung betrifft eine Temperatur-Regeleinrichtung für aufzuheizende bzw. durch taktend reglergesteuerte Beheizung auf einer Soll-Temperatur zu haltende Medien, insbesondere Flüssigkeiten oder Gase, mit einem hydraulischen Regler für die Medien-Beheizung, der mit einem abgesondert von der die Medien-Beheizung bildenden Heizeinrichtung angeordneten, für eine überflutete Anordnung im Medium ausgebildeten Fühlerrohr eines Ausdehnungssystemes verbunden ist.

Bei der Beheizung von Medien, insbesondere von temperaturempfindlichen Gasen oder Flüssigkeiten, wie Fritierfette, exakt zu temperierendem Heißwasser o.dgl. ist es meist schwierig, eine ausreichend geringe Schaltdifferenz zu erreichen, d.h. die Beheizung so zu steuern, daß der niedrigste und höchste Temperaturwert des Mediums möglichst eng beieinanderliegen. Dies ist insbesondere dann schwierig, wenn für den Ausgleich eines hohen plötzlichen Temperaturabfalles die Beheizung sehr leistungsstark dimensioniert ist. Das Fühlerrohr greift nämlich z.B. bei einer Ausbildung nach der US-A-3 720 155 den Meßwert der jeweiligen Temperatur im wesentlichen ausschließlich über das aufzuheizende Medium ab, weshalb es während des Aufheizens meist nur verzögert anspricht. Es wurde zwar bereits versucht, diese Nachteile dadurch zu verringern, daß gemäß der DE-A-2 026 965, der EP-A1-0 133 906 und der EP-A2-0 157 277 das Fühlerrohr möglichst nahe an die Heizeinrichtung für das Medium herangelegt wurde, jedoch können hierdurch ebenfalls wiederum Ungenauigkeiten in der Regelung auftreten,

Durch die US-A-3 384 195 ist auch eine temperaturgeregelte, elektrisch betriebene Bratpfanne bekanntgeworden, deren Temperaturfühler zwar außerhalb des Pfannenraumes liegt, jedoch durch gut wärmeleitende Verbindung unmittelbar und ausschließlich nur von den Heizkörpern beheizt wird, die auch zur Beheizung der Bratpfanne selbst vorgesehen sind.

Der Erfindung liegt die Aufgabe zugrunde, eine Temperatur-Regeleinrichtung der genannten Art zu schaffen, durch welche auf einfache Weise eine sehr geringe Regelschaltdifferenz erzielt werden kann.

Zur Lösung dieser Aufgabe ist bei einer Temperatur-Regeleinrichtung der eingangs genannten Art erfindungsgemäß vorgesehen, daß die Halterung des Fühlerrohres zur direkten Fühlerbeheizung in unmittelbar wärmeleitender Verbindung mit mindestens einem der Medien-Beheizung nicht zugehörigen Heizelement steht, das wie das Fühlerrohr für eine vom Medium umspülte Anordnung ausgebildet ist. Das Fühlerrohr wird also von einem, insbesondere im wesentlichen zeitgleich mit der Heizeinrichtung in und außer Betrieb gesetzten Heizelement, das im wesentlichen ausschließlich der direkten Beheizung des Fühlerrohres dient und wesentlich leistungsschwächer als die Heizeinrichtung dimensioniert sein kann, unter Umgehung des aufzuheizenden Mediums beheizt und durch das Medium quasi so lange unter die Schalttemperatur abgekühlt, bis das Medium selbst die Schalt- bzw. Soll-Temperatur erreicht hat. Dadurch ist die Regelschaltdifferenz in jedem Fall überbrückt, so daß bis zur Schaltung durch das in der Temperatur ansteigende Medium nur noch wenige Differenzgrade notwendig sind. Hat das Medium die Soll-Temperatur erreicht, so schaltet sowohl die Heizeinrichtung, die z.B. durch eine Behälter-Beheizung gebildet sein kann, als auch das Heizelement des Fühlerrohres aus, wonach sich die Fühlerrohr-Temperatur sehr schnell derjenigen des es umspülenden Mediums angleicht. Die Regeltoleranz ist dann zum unteren Schaltpunkt, bei welchem die Heizeinrichtung und das Heizelement wieder eingeschaltet werden, ebenfalls wieder überbrückt. Wird nach entsprechendem Absinken der Temperatur des Mediums über die Regeleinrichtung die Heizeinrichtung wieder eingeschaltet, so wird auch gleichzeitig das Heizelement des Fühlerrohres unter Spannung gesetzt, wodurch die Schaltdifferenz dann in der Nähe des oberen Schaltpunktes überbrückt bzw. reduziert wird. Durch eine derartige Kompensation spielt die Größe der eigenen Differenz des Thermostaten keine wesentliche Rolle mehr, da sie durch die Bemessung des Heizelementes für das Fühlerrohr beeinflußt werden kann.

Die erfindungsgemäße Ausbildung ist insbesondere zur Beheizung fettiger bzw. öliger Medien, nämlich beispielsweise für Friteusen-Beheizeinrichtungen, geeignet. Hier hat es sich gezeigt, daß ohne weiteren Aufwand eine Schaltdifferenz von ± 2,5 °C erreicht werden kann. Die erfindungsgemäße Regeleinrichtung arbeitet dabei selbst dann zuverlässig, wenn das in den Medienbehälter eingegebene Medium zunächst, nämlich beispielsweise bei Raumtemperatur, nicht flüssig, sondern fest ist. In diesem Fall wird die Heizeinrichtung zunächst zweckmäßig nur etwa auf einem Zehntel der Voll-Last gefahren, wobei das direkt beheizte Fühlerrohr gewährleistet, daß das feste Fett langsam geschmolzen bzw. verflüssigt und örtlich nicht überhitzt wird. Sind nämlich die von außen beheizten Wandungen des Medienbehälters vom Fett nicht genügend bedeckt und wird die Wärmeenergie daher vom Fett nicht sofort von den Wandungen abgenommen, so tritt ein weiterer, der Heizeinrichtung unmittelbar zugeordneter und beispielsweise mit seinem Fühlerrohr in unmittelbarer Nähe der Heizeinrichtung an der Außenseite der Behälterwandungen angeordneter Fett-Temperaturregler in Funktion und unterbricht die Heizleistung. Dadurch wird eine absolute Sicherheit gegen Überhitzen des Fettes oder Öles erreicht und eine Brandgefahr völlig ausgeschlossen. Des weiteren ergibt sich die vorteilhafte Möglichkeit, daß ohne Bedenken sowohl festes Fett in beliebiger Raumform als auch flüssiges Fett in die Friteuse gegeben werden kann. Die erfindungsgemäße Ausbildung eignet sich aber auch für die Beheizung von Wasser, Heißluft u.dgl.

Nach einem weiteren Merkmal der Erfindung weist die Halterung einen das Fühlerrohr wenigstens teilweise umgebenden Mantel, insbesondere ein Schutzrohr auf, dessen Innenquerschnitte bei mediendichter Aufnahme des Fühlerrohres vorzugsweise eng an die Außenquerschnitte des Fühlerrohres angepaßt sind, so daß die beiden Rohre quasi einen gemeinsamen Mantel bilden. Das Fühlerrohr braucht damit zur Erzielung eines guten Wärmeflusses nicht unmittelbar mit dem Heizelement verbunden und - wie auch denkbar - nicht unmittelbar vom aufzuheizend Medium umspült zu werden, sondern zwischen dem das aufzuheizende Medium nicht direkt berührenden Fühlerrohr einerseits und dem Heizelement sowie dem Medium andererseits ist eine gut leitende Wärmebrücke in Form der Halterung bzw. des Schutzrohres vorgesehen.

Demgemäß weist die Halterung erfindungsgemäß eine metallische Wärmeleitbrücke zwischen dem Heizelement und dem Fühlerrohr auf, die insbesondere durch lotnahtartiges Anlegieren des Mantels an das Heizelement und/oder unmittelbaren Berührungskontakt zwischen Fühlerrohr und Mantel gebildet ist. Die Wärmeleitbrücke könnte auch wenigstens teilweise durch unmittelbaren Berührungskontakt zwischen Fühlerrohr und Heizelement gebildet sein.

Bei einer baulich besonders einfachen Ausführungsform des Erfindungsgegenstandes ist das Heizelement stabförmig ausgebildet, insbesondere durch einen Rohrheizkörper gebildet und/oder im wesentlichen parallel zum Fühlerrohr sowie mindestens annähernd über dessen Länge reichend vorgesehen.

Der Wärmeübergang vom Heizelement zum Fühlerrohr einerseits sowie die gleichzeitige Abkühlung des Fühlerrohres durch das umspülende Medium andererseits können noch weiter dadurch verbessert werden, daß das Fühlerrohr an unterschiedlichen Umfangszonen, insbesondere im Bereich zweier einander etwa diametral gegenüberliegender Mantellinien vom Heizelement tangiert ist, das vorzugsweise das Fühlerrohr zwischen zwei U-förmig ineinander übergehenden Schenkeln aufnimmt. Ist das Fühlerrohr in einem Mantel, beispielsweise einem Schutzrohr angeordnet, so tangiert das Heizelement das Fühlerrohr in entsprechender Weise unter Vermittlung dieses Mantels. Im Bereich zweier Umfangszonen ist somit das Fühlerrohr unmittelbar mit dem Heizelement wärmeleitend verbunden, während es bzw. der Mantel im Bereich zweier benachbart dazu liegender Umfangszonen unmittelbar vom aufzuheizenden Medium umspült wird und dadurch mit diesem Medium unmittelbar wärmeleitend verbunden ist.

Zur einfachen Montage der Regeleinrichtung sind die Enden des Heizelementes und/oder der Mantel für das Fühlerrohr an einer Flanschplatte befestigt, insbesondere derart, daß sie freiliegend von dieser abstehen und somit die Oberfläche des Heizelementes im wesentlichen über seine ganze Erstreckung unmittelbar in Berührung mit dem aufzuheizenden Medium steht. Die Baueinheit aus Heizelement und Fühlerrohr bzw. Schutzrohr ist dabei von weiteren, relativ eng anschließenden Umkleidungen, wie beispielsweise einem sie aufnehmenden Gehäuse frei, so daß diese Baueinheit den durch die Aufheizung erzeugten, beispielsweise in Kreisläufen geführten Strömungen des Mediums unmittelbar ausgesetzt ist.

Die Erfindung wird im folgenden anhand des in den Zeichnungen dargestellten Ausführungsbeispieles näher erläutert. Es sind dargestellt in

Fig. 1 eine erfindungsgemäße Regeleinrichtung in Ansicht,
Fig. 2 ein Schnitt nach der Linie II-II in Fig. 1 in vergrößerter Darstellung.

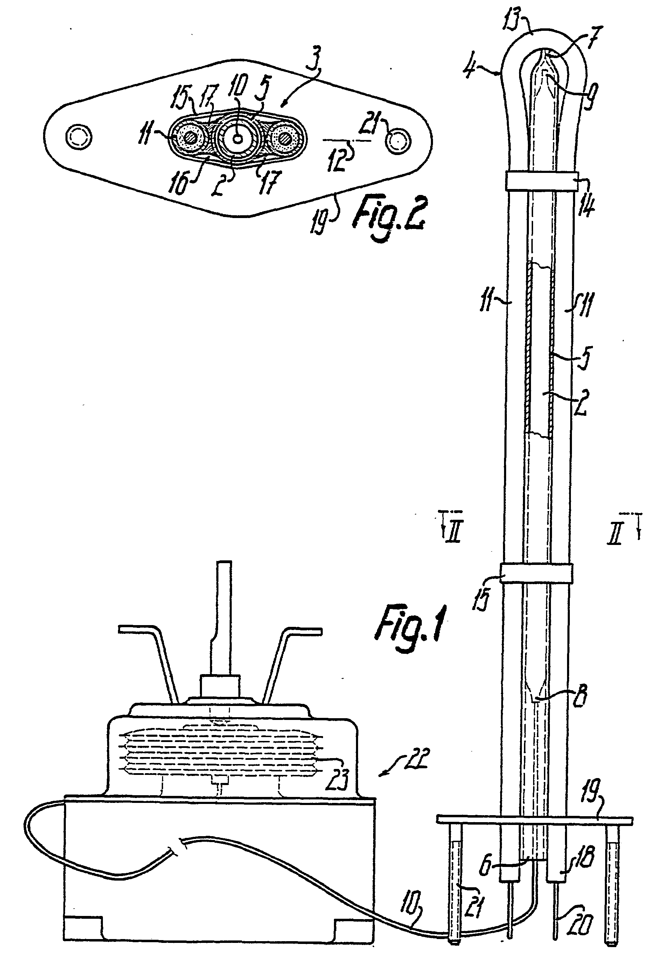

Wie die Fig. 1 und 2 zeigen, weist eine erfindungsgemäße Regeleinrichtung ein durchgehend gerades, zylindrisches Fühlerrohr 2, eine Halterung 3 für dieses Fühlerrohr 2 und ein Heizelement 4 in Form eines im wesentlichen haarnadelförmig gekrümmten, zylindrischen Rohrheizkörpers auf, der mit elektrischem Strom zu betreiben ist.

Die Halterung 3 weist einen das Fühlerrohr 2 auf dessen ganzer Länge umgebenden, im Querschnitt an das Fühlerrohr 2 angepaßten, also im vorliegenden Beispiel zylindrischen Mantel 5 in Form eines Schutzrohres auf, dessen den über seine ganze Länge im wesentlichen konstanten Außenquerschnitten des Fühlerrohres 2 gleichende lichte Querschnitte nur um ein so geringes Maß größer als die Außenquerschnitte des Fühlerrohres 2 sind, daß nach Art eines Schiebesitzes das zum Einschieben und Herausziehen des Fühlerrohres 2 erforderliche Bewegungsspiel gegeben ist . Das Fühlerrohr 2 wird in seiner Längsrichtung von einem offenen Ende 6 her in den Mantel 5 eingeschoben. Am anderen Ende 7 ist der Mantel 5 dicht, beispielsweise durch Quetschung geschlossen. Mit seinem zugehörigen inneren Ende 9 reicht das Fühlerrohr 2 annähernd bis an dieses Ende 7 des Mantels 5. Die Länge des Fühlerrohres 2 ist kleiner als die des Mantels 5, so daß das andere Ende 8 des Fühlerrohres 2, an welches das zugehörige Ende eines Kapillarrohres 10 des Ausdehnungssystemes angeschlossen ist, mit Abstand vom offenen Ende 6 des Mantels 5 liegt. Der Durchmesser des Mantels 5 liegt in der Größenordnung des Durchmessers des Heizelementes 4.

Das Heizelement 4 liegt mit seinen beiden, zueinander parallen und im wesentlichen durchgehend geraden Schenkeln 11 linienförmig am Außenumfang des Mantels 5 an, derart, daß beide Schenkel 11 und der Mantel 5 in einer gemeinsamen Axialebene 12 liegen. Im Bereich des beim Ende 7 des Mantels 5 liegenden Übergangsabschnittes 13 zwischen den Schenkeln 11 ist das Heizelement 4 entweder mit einem dem halben Durchmesser des Mantels 5 entsprechenden Krümmungsradius U-förmig gebogen, oder, falls der kleinste zulässige Biegeradius des Heizelementes 4 demgegenüber größer ist, mit diesem Biegeradius gebogen. Das Ende 7 des Mantels 5 kann dabei bis an die Krümmungsinnenseite des Übergangsabschnittes 13 reichen. Benachbart zum Übergangsabschnitt 13 sind die Schenkel 11 des Heizelementes 4 sowie der Mantel 5 von einer Schelle 14 aus dünnem, blechartigem metallischem Werkstoff umgeben und dadurch formschlüssig zusammengehalten und gegeneinander ausgerichtet. Eine weitere, gleiche Schelle 15 befindet sich im Bereich des Fühlerrohres 2 benachbart zu dessen anderem Ende 8.

Das Fühlerrohr 2 ist mit dem Heizelement 4 im wesentlichen über seine ganze Länge durchgehend über eine Wärmeleitbrücke 16 verbunden. Ein, unmittelbar das Fühlerrohr 2 tangierender Abschnitt dieser Wärmeleitbrücke 16 ist durch den Mantel 5 gebildet. Ein weiterer Abschnitt der Wärmeleitbrücke 16 ergibt sich durch die direkt berührende Anlage der Schenkel 11 des Heizelementes 4 am Außenumfang des Mantels 5. Zur weiteren Erhöhung der Wärmeübergangs-Querschnitte zwischen Fühlerrohr 2 und Heizelement 4 sind kehlnahtartige Lotnähte 17 zwischen den Schenkeln 11 des Heizelementes 4 und dem Mantel 5 vorgesehen. Jede Lotnaht 17 füllt die zugehörige Fuge zwischen der Linie, an welcher der zugehörige Schenkel 11 des Heizelementes 4 den Umfang des Mantels 5 berührt und den weiter außen liegenden Umfangszonen des jeweiligen Schenkels 11 und des Mantels 5 vollständig aus, wobei die Tiefe des ausgefüllten Abschnittes der Fuge annähernd dem halben Durchmesser des Heizelementes 4 entsprechen kann. Die beiden Schenkel 11 des Heizelementes 4 sind somit über vier Lotnähte mit dem Mantel 5 verbunden. Diese Verbindung kann durch sogenanntes Anlegieren erfolgen, bei welchem die zu verbindenden Teile mit einem pastösen Lötmittel versehen werden, das dann durch Beheizung in einem Ofen o.dgl. verflüssigt wird und sich innig mit den aneinander zu befestigenden Teilen verbindet. Benachbart zu den Lotnähten 17 weist der Mantel 5 freiliegende Umfangsabschnitte auf.

Die Enden 18 der Schenkel 11 des Heizelementes 4, die über das zugehörige Ende 6 des Mantels 5 geringfügig vorstehen, durchsetzen ebenso wie das Ende 6 des Mantels 5 abgedichtet eine ebene Flanschplatte 19, die rechtwinklig zu ihren Mittelachsen liegt. An der Außenseite der Flanschplatte 19 weisen die Enden 18 des Heizelementes 4 Anschlußglieder 20 für den elektrischen Anschluß des Heizelementes 4 auf. Die Flanschplatte 19 weist beispielsweise zwei parallele Stehbolzen 21 auf, die über ihre Außenseite vorstehen und mit welchen die Regeleinrichtung 1 derart an einer Behälterwand befestigt werden kann, daß die Flanschplatte 19 an der Innenseite dieser Behälterwandung anliegt und die zugehörige Öffnung in der Behälterwandung dicht verschließt.

Das Fühlerrohr 2 ist über das Kapillarrohr 10 mit einem einstellbaren Schaltorgan 22 verbunden, welches eine an das Kapillarrohr 10 angeschlossene Ausdehnungsdose 23 des Ausdehnungssystems enthält und über welches sowohl das Heizelement 4 als auch die Heizeinrichtung für das aufzuheizende Medium ein- und ausgeschaltet wird.

Durch das beschriebene beheizte Fühlersystem kann die Schaltdifferenz am Regler ganz wesentlich vermindert werden, weil durch dieses Fühlersystem die eigentliche Regelschaltdifferenz überbrückt wird. Beispielsweise kann die Anordnung so gewählt werden, daß beim Einschalten der Heizeinrichtung für das Medium gleichzeitig das Heizelement 4 mit eingeschaltet und dadurch die Temperatur des Fühlerrohres 2 um etwa 10 °C höher gehalten wird als die jeweilige Temperatur des aufzuheizenden Mediums. Ist dann die Soll-Temperatur des Mediums erreicht, so wird außer der Heizeinrichtung auch das Heizelement 4 abgeschaltet und das Fühlerrohr 2 erreicht nach kürzester Zeit die Temperatur des es umgebenden Mediums. Dadurch ist eine sichere Schaltfunktion bei gleichbleibenden Amplituden gewährleistet. Liegt beispielsweise im Thermostat eine Schaltdifferenz von ± 10 °C, also 20 K vor, so kann durch die erfindungsgemäße Ausbildung der Thermostat durch die beschriebene Beheizung mittels des Heizelementes 4 auf eine Schaltgenauigkeit von ± 1 °C gebracht werden.

**Patentansprüche**

1. Temperatur-Regeleinrichtung für aufzuheizende bzw. durch taktend reglergesteuerte Beheizung auf einer Soll-Temperatur zu haltende Medien, insbesondere Flüssigkeiten oder Gase, mit einem hydraulischen Regler für die Medien-Beheizung, der mit einem abgesondert von der die Medien-Beheizung bildenden Heizeinrichtung angeordneten, für eine überflutete Anordnung im Medium ausgebildeten Fühlerrohr (2) des Ausdehnungssystemes des hydraulischen Reglers verbunden ist, dadurch gekennzeichnet, daß die Halterung (3) des Fühlerrohres (2) zur direkten Fühlerbeheizung in unmittelbar wärmeleitender Verbindung mit mindestens einem der Medien-Beheizung nicht zugehörigen Heizelement (4) steht, das wie das Fühlerrohr (2) für eine vom Medium umspülte Anordnung ausgebildet ist.

2. Regeleinrichtung nach Anspruch 1, dadurch gekennzeichnet, daß die Halterung (3) einen das Fühlerrohr (2) wenigstens teilweise umgebenden Mantel (5), insbesondere ein Schutzrohr, aufweist.

3. Regeleinrichtung nach Anspruch 2, dadurch gekennzeichnet, daß die Innenquerschnitte des Mantels (5) bei mediendichter Aufnahme des Fühlerrohres (2) eng an die Außenquerschnitte des Fühlerrohres (2) angepaßt sind.

4. Regeleinrichtung nach einem der vorhergehenden Ansprüche, dadurch gekennzeichnet, daß die Halterung (3) eine metallische Wärmeleitbrücke (16) zwischen dem Heizelement (4) und dem Fühlerrohr (2) aufweist, die insbesondere durch lotnahtartiges Anlegieren des Mantels (5) an das Heizelement (4) gebildet ist.

5. Regeleinrichtung nach Anspruch 4, dadurch gekennzeichnet, daß die Wärmeleitbrücke durch unmittelbaren Berührungskontakt zwischen Fühlerrohr (2) und Mantel (5) gebildet ist.

6. Regeleinrichtung nach einem der vorhergehenden Ansprüche, dadurch gekennzeichnet, daß das Heizelement (4) stabförmig ausgebildet, insbesondere durch einen Rohrheizkörper gebildet ist.

7. Regeleinrichtung nach einem der vorhergehenden Ansprüche, dadurch gekennzeichnet, daß das Heizelement (4) im wesentlichen parallel zum Fühlerrohr (2) sowie mindestens annähernd über dessen Länge reichend angeordnet ist.

8. Regeleinrichtung nach einem der vorhergehenden Ansprüche, dadurch gekennzeichnet, daß das Fühlerrohr (2) an unterschiedlichen Umfangszonen, insbesondere im Bereich zweier einander etwa diametral gegenüberliegender Mantellinien vom Heizelement (4) tangiert ist.

9. Regeleinrichtung nach einem der vorhergehenden Ansprüche, dadurch gekennzeichnet, daß das Heizelement (4) das Fühlerrohr (2) zwischen zwei U-förmig ineinander übergehenden Schenkeln (11) aufnimmt.

10. Regeleinrichtung nach einem der vorhergehenden Ansprüche, dadurch gekennzeichnet, daß die Enden (18) des Heizelementes (4) und/oder der Mantel (5) für das Fühlerrohr (2) an einer Flanschplatte (19) befestigt sind und freiliegend von dieser abstehen.

## Claims

1. Temperature regulating device for media, particularly liquids or gases which are to be heated or kept at a desired temperature by intermittent thermostatically controlled heating, with a hydraulic regulator for the medium heating, which is connected to a sensor tube (2) of an expansion system of the hydraulic regulator arranged separately from a heating device forming a medium heating means and constructed for a flooded arrangement in the medium, characterized in that the sensor tube (2) mounting support (3) is in direct heat conducting connection with at least one heating element (4) separate from the medium heating device for direct sensor heating, said heating element, like the sensor tube, is constructed for an arrangement around which flows the medium.

2. Regulating device according to claim 1, characterized in that the mounting support (3) has a jacket (5) at least partly surrounding the sensor tube (2) and in particular in the form of a protective tube.

3. Regulating device according to claim 2, characterized in that the jacket (5) receives the sensor tube (2) sealingly enclosed against the media, the internal cross-sections of the jacket being closely adapted to the external cross-sections of the sensor tube (2).

4. Regulating device according to one of the preceding claims, characterized in that the mounting support (3) has a metallic heat conduction bridge (16) between the heating element (4) and the sensor tube (2), particularly formed by soldered joint-like alloying of the jacket (5) onto the heating element (4).

5. Regulating device according to claim 4, characterized in that the heat conducting bridge is formed by direct contact between the sensor tube (2) and the jacket (5).

6. Regulating device according to one of the preceding claims, characterized in that the heating element (4) has a rod-like construction and is in particular formed by a tubular heater.

7. Regulating device according to one of the preceding claims, characterized in that the heating element (4) is arranged substantially parallel to the sensor tube (2) and extends at least approximately over the length thereof.

8. Regulating device according to one of the preceding claims, characterized in that the heating element (4) touches the sensor tube (2) in different circumferential zones, particularly in the vicinity of two diametrically facing generatrixes.

9. Regulating device according to one of the preceding claims, characterized in that the heating element (4) receives the sensor tube (2) between two U-shaped legs (11) passing into one another.

10. Regulating device according to one of the preceding claims, characterized in that the ends (18) of the heating element (4) and/or jacket (5) for sensor tube (2) are fixed to a flange plate (19) and project in exposed manner therefrom.

## Revendications

1. Dispositif de régulation thermique pour des fluides devant être respectivement réchauffés ou maintenus à une température de consigne par un moyen de chauffage à commande cyclique, en particulier des liquides ou des gaz, comportant, pour le chauffage des fluides, un régulateur hydraulique relié à un tube détecteur (2) du système à expansion dudit régulateur hydraulique, conçu pour être immergé dans le fluide et installé à part du moyen de chauffage des fluides, caractérisé par le fait que, en vue du chauffage direct du détecteur, le support (3) du tube détecteur (2) est en liaison thermoconductrice directe avec au moins un élément chauffant (4), qui ne fait pas partie du moyen de chauffage des fluides et est conçu, tout comme le tube détecteur (2), pour être entouré par le fluide.

2. Dispositif de régulation selon la revendication 1, caractérisé par le fait que le support (3) comporte une enveloppe (5), notamment un tube protecteur, qui entoure au moins partiellement le tube détecteur (2).

3. Dispositif de régulation selon la revendication 2, caractérisé par le fait que, lorsque le tube détecteur (2) est étanche aux fluides, les sections internes de l'enveloppe (5) sont étroitement adaptées aux sections externes dudit tube détecteur (2).

4. Dispositif de régulation selon l'une des revendications précédentes, caractérisé par le fait que le support (3) présente, entre l'élément chauffant (4) et le tube détecteur (2), un pont métallique thermiquement conducteur (16), qui est en particulier formé en rapportant l'enveloppe (5) sur l'élément chauffant (4) à la manière d'un joint brasé.

5. Dispositif de régulation selon la revendication 4, caractérisé par le fait que le pont thermiquement conducteur est formé par un contact direct entre le tube détecteur (2) et l'enveloppe (5).

6. Dispositif de régulation selon l'une des revendications précédentes, caractérisé par le fait que l'élément chauffant (4) est réalisé avec une configuration en barrette et est notamment formé par un corps chauffant tubulaire.

7. Dispositif de régulation selon l'une des revendications précédentes, caractérisé par le fait que l'élément chauffant (4) est disposé pour l'essentiel parallèlement au tube détecteur (2), en s'étendant au moins approximativement sur la longueur de celui-ci.

8. Dispositif de régulation selon l'une des revendications précédentes, caractérisé par le fait que l'élément chauffant (4) est tangent au tube détecteur (2) dans différentes zones périphériques, notamment au voisinage de deux génératrices à peu près diamétralement opposées l'une à l'autre.

9. Dispositif de régulation selon l'une des revendications précédentes, caractérisé par le fait que l'élément chauffant (4) reçoit le tube détecteur (2) entre deux branches (11) se rejoignant l'une à l'autre en forme de U.

10. Dispositif de régulation selon l'une des revendications précédentes, caractérisé par le fait que les extrémités (18) de l'élément chauffant (4) et/ou l'enveloppe (5) destinée au tube détecteur (2), sont fixées à une plaque de bridage (19), au-delà de laquelle elles font librement saillie.

EP 0 230 496 B1

Fig.2

Fig.1